Europäisches Patentamt

European Patent Office

Office européen des brevets

(19)

(11) Publication number: **0 191 460**
A2

## (12) EUROPEAN PATENT APPLICATION

(21) Application number: **86101716.8**

(22) Date of filing: **11.02.86**

(51) Int. Cl.⁴: **C 08 F  218/06,** C 08 F  214/06,
C 08 F  2/30, C 09 D  3/74

(30) Priority: **14.02.85  US 701599**

(43) Date of publication of application: **20.08.86**
**Bulletin 86/34**

(84) Designated Contracting States: **BE DE FR GB IT NL SE**

(71) Applicant: **AIR PRODUCTS AND CHEMICALS, INC., P.O. Box 538, Allentown, Pennsylvania 18105 (US)**

(72) Inventor: **Daniels, Wiley Edgar, 3760 Baldwin Drive, Easton, PA 18042 (US)**

(74) Representative: **Kador & Partner, Corneliusstrasse 15, D-8000 München 5 (DE)**

(54) Polyvinyl alcohol-containing emulsion polymers having enhanced water resistance.

(57) A resin emulsion comprises a polymer prepared by the emulsion polymerization of vinyl acetate, vinyl acetate and ethylene or vinyl chloride and ethylene in an aqueous medium containing polyvinyl alcohol as the emulsifying agent and a non-ionic redox system comprising hydrogen peroxide or an organic peroxy compound as the oxidant and ascorbic acid or erythorbic acid as the reductant.
The polyvinyl alcohol-containing resin coatings prepared from such emulsions have enhanced water resistance.

ACTORUM AG

186-P-US02862

## POLYVINYL ALCOHOL-CONTAINING EMULSION POLYMERS
## HAVING ENHANCED WATER RESISTANCE

### Field of the Invention

The present invention relates to emulsions of vinyl acetate homopolymers and vinyl acetate-ethylene and vinyl chloride-ethylene copolymers and polymer coatings deposited from such emulsions.

### Background of the Invention

Emulsion polymerization processes employing polyvinyl alcohol or celluloses such as hydroxyethylcellulose as the emulsifier, or protective colloid, yield emulsion polymer products widely used as adhesives and binders. Such products have historically been known to possess poor resistance to water, generally manifested as a loss of adhesive strength on exposure to water or as an unattractive whitening characteristically known as "blushing". This poor water resistance property has inhibited the use of such polymers prepared in the presence of polyvinyl alcohol or celluloses as coatings coming in contact with water, for example, as interior container coatings.

To overcome this water sensitivity, crosslinking agents have been added to react with the polyvinyl alcohol of the polymer coating to render it water insoluble. However, such coatings still demonstrate the unattractive blushing on exposure to water.

U.S. 2,398,344 discloses the emulsion polymerization of vinyl acetate in the presence of partially hydrolyzed polyvinyl acetate using any organic or inorganic peroxides, preferably benzoyl peroxide or hydrogen peroxide, as the catalyst.

U.S. 2,843,562 attempts to overcome the water sensitivity of graft copolymers of polyvinyl alcohol and vinyl chloride by incorporating a small amount of a cross-linking monomer containing at least two olefinic unsaturations.

U.S. 3,399,157 teaches improving the stability of ethylene/vinyl chloride latexes by adding only a portion of the desired amount of emulsifying agent to the reaction mixture prior to the initiation of polymerization and adding a second portion to the reaction mixture after the polymerizaton is completed.

U.S. 3,501,440 discloses in Example 5 and reference Examples 5-6 the use of polyvinyl alcohol as the protective colloid in the copolymerization of ethylene with vinyl chloride at a reaction temperature between the critical temperature of ethylene and 60°C and at an ethylene pressure which is maintained substantially constant by withdrawing excess ethylene out of the reaction vessel during the polymerization.

U.S. 3,703,492 discloses the preparation of vinyl acetate/ethylene copolymer emulsions having improved water resistance by copolymerizing vinyl acetate with ethylene in an aqueous dispersion in the presence of 0.05 to 1.5% of a rosin. Any known protective colloid may also be used. The catalysts suggested for use include peroxides such as, for example, potassium persulfate, ammonium persulfate, benzoyl peroxide, hydrogen peroxide and mixtures thereof. A combination of peroxides with reducing agents such as, for example, sodium bisulfite, ascorbic acid or sodium thiosulfate, may also be used.

U.S. 3,736,303 discloses a latex composition comprising a copolymer of vinylidene chloride, an ethylenically unsaturated sulfur acid having sulfur in a valent state of 6, optionally an ethylenically unsaturated carboxylic acid and another ethylenically unsaturated monomer prepared using a seed latex, an ascorbic acid-hydrogen peroxide redox system, and ionic buffers and surfactants.

U.S. 3,932,335 discloses aqueous dispersions of water resistant adhesive compositions comprising a vinyl ester polymer, polyvinyl alcohol, glyoxal and a water miscible alcohol having 1 to 3 carbon atoms.

U.S. 4,128,518 discloses a pressure-sensitive adhesive containing a base material comprising an aqueous emulsion of vinyl acetate-ethylene copolymer prepared by the emulsion copolymerization of vinyl acetate and ethylene in the presence of a protective colloid and a polyoxyethylenic nonionic surfactant and a water soluble initiator, for instance, hydrogen peroxide, potassium persulfate, ammonium persulfate, alone or in combination with a reducing agent, for example, l-ascorbic acid, sodium formaldehyde sulfoxylate, and ferrous sulfate.

U.S. 4,150,210 discloses a one-step process for the emulsion polymerization of vinyl chloride and, optionally, comonomers using a water-soluble initiator or initiator system and a mixed emulsifier of (1) a $C_{12}$-$C_{18}$ straight chain alkyl or alkenyl surfactant; (2) a $C_{14}$-$C_{20}$ straight chain alkyl or alkenyl alcohol; and (3) a $C_5$-$C_8$ straight alkyl chain sulfosuccinate emulsifier. The examples show the use of a hydrogen peroxide-ascorbic acid redox system.

U.S. 4,189,415 discloses aqueous vinyl chloride-vinyl acetate-ethylene copolymer dispersions containing only polyvinyl alcohol as the protective colloid. All of the polyvinyl alcohol or only part of it can be introduced at the beginning, the ethylene pressure applied is kept constant and the polymerization temperature is 10-85°C, preferably 20-50°C.

Representative of art showing the emulsion polymerization of vinyl acetate and ethylene in the presence of polyvinyl alcohol are U.S. Patents 3,661,696; 3,734,819; 3,769,151; 4,118,357; 4,133,791; 4,043,961 and 3,827,996.

## Summary of the Invention

The present invention provides polyvinyl alcohol-containing polymer emulsions which can deposit a polymer coating that has enhanced water resistance, which water resistance can be further increased by crosslinking the hydroxyl sites on the polyvinyl alcohol polymer with crosslinking agents.

The resin emulsion comprises a polymer prepared by the aqueous emulsion polymerization of vinyl acetate, vinyl acetate and ethylene, or vinyl chloride and ethylene, the emulsion polymerization being effected in an aqueous medium which comprises an emulsifying system consisting essentially of a polyvinyl alcohol and a non-ionic redox system consisting essentially of hydrogen peroxide or an organic peroxy compound as the oxidant and ascorbic acid or its enantiomer erythorbic acid as the reductant.

Preferably the aqueous polymerization reaction medium is salt-free, "salt-free" meaning the substantial absence of ionic materials, for example the presence of ionic materials at less than about 0.1 wt% based on solids.

As an advantage of the invention, the emulsion polymerization of the vinyl monomers and ethylene in the presence of polyvinyl alcohol using a nonionic redox system and especially in the substantial absence of ionic materials yields emulsions that deposit polymer films of dramatically improved water resistance relative to films deposited from emulsions made in the presence of typical amounts of ionic emulsifying agents, ionic redox agents or other ionic materials.

As a further advantage, crosslinking of these emulsion polymers with external or internal crosslinking agents such as dialdehydes affords films that are almost totally resistant to boiling water as judged by freedom of "blushing" and maintenance of adhesive qualities.

## Detailed Description of the Invention

According to the present invention one key to enhancing the water resistance of polymers prepared by the aqueous emulsion polymerization of vinyl acetate, vinyl acetate with ethylene or vinyl chloride with ethylene is that the emulsifier used for dispersing the monomers and the resultant polymers in the aqueous medium be non-ionic. Therefore, the typical quantities of cationic and anionic surfactants which are normally used in the art such as cetyl trimethyl ammonium chloride, sodium lauryl sulfate, the sodium salt of an alkylaryl polyether sulfate and the like are ruled out by this requirement. However, it has also been discovered that non-ionic emulsifying agents such as the polyoxyethylene condensates and the celluloses and hydroxyalkylcelluloses are not as effective as polyvinyl alcohol for use as the emulsifier, or protective colloid, in the polymerization recipe to provide water resistant polymers, although their presence in the polymerization recipe is not entirely excluded.

The polyvinyl alcohols which are suitable for use in the invention are, in general, 30 to 99% hydrolyzed, preferably 87 to 89%, and have a degree of polymerization ranging from 100 to 10,000, preferably 1,000 to 2,000. The amount of polyvinyl alcohol used in the polymerization reaction is that amount typically added as the emulsifying agent, or protective colloid, in various polymerization recipes, i.e., an emulsifyingly effective amount, for example 3 to 30% based on the weight of monomers in the polymerization recipe. For the ethylene copolymers with vinyl chloride and vinyl acetate, the preferred amount of polyvinyl alcohol in the recipe is 3 to 15 wt%. The polyvinyl alcohol can be added to the polymerization reaction medium all at once prior to initiation or incrementally during the course of the polymerization, provided at least 2%, based on monomer charge, is present initially to provide emulsion stability.

In addition to the polyvinyl alcohol, non-ionic emulsifying agents can optionally be added. Suitable non-ionic emulsifying agents include polyoxyalkylene condensates. It is also possible to add another protective colloid, such as hydroxyalkyl cellulose, with the polyvinyl alcohol in the aqueous reaction medium. However, when such polyoxyalkylene condensates or hydroxyalkyl celluloses are also added, their amount should not be so much as to interfere with the water resistance enhancement of the polyvinyl alcohol; i.e. no more than about 0.5 wt%.

Whereas the redox catalyst systems typically used in polymerization recipes include at least one component which is ionic in character, the redox systems of the present invention must be non-ionic, as far as the oxidant and reductant are concerned.

Suitable oxidizing agents, or initiators, include hydrogen peroxide and organic peroxy compounds. Illustrative of the organic peroxides that can be used are alkylhydroperoxides such as t-butyl hydroperoxide, dialkyl peroxides such as di-t-butyl peroxide, peroxy acids such as peracetic acid and perbenzoic acid, diacyl peroxides such as diacetyl peroxide and dilauroyl peroxide, and peroxy esters such as t-butyl peracetate and t-butyl perbenzoate. It is highly desirable that organic peroxy compounds which are substantially water soluble, as opposed to those which are primarily soluble in the monomer phase, be used. Such water soluble organic peroxides would include t-butyl hydroperoxide and peracetic acid.   The preferred oxidant for use in the invention is hydrogen peroxide.

The reductant component of the redox system used in the practice of the invention is ascorbic acid or its enantiomer erythorbic acid.

Thus, the preferred redox catalyst system for making water resistant emulsion polymers comprises hydrogen peroxide and ascorbic acid or erythorbic acid.

The non-ionic redox system is used in typically catalytically effective amounts.   The oxidizing agent is generally employed in an amount of 0.01 to 1.0%, preferably 0.05 to 0.5% based on the weight of monomers introduced into the polymerization system.   The reductant is ordinarily added in an aqueous solution in the necessary equivalent amount.   It is important that the ascorbic acid or erythorbic acid reductant be present in the polymerization recipe because it appears that these compounds have a "protective effect" against the oxidative degradation of polyvinyl alcohol which, it is believed, adversely affect its water resistance.

In the preparation of the vinyl acetate homopolymers it is particularly important that dilute (~1 to 2%), separate solutions of hydrogen peroxide and ascorbic acid be added at rates of about 0.5 to 2 ml/min and continued at the same or decreasing rate until monomer content is less than about 0.5 wt%.

The non-ionic redox catalyst system may optionally contain promoters such as ferrous sulfate in typically minor amounts, for example, less than about 10 ppm.   Such minor amounts of ionic materials would not adversely affect the water resistance of the emulsion polymers.

Needless to say, in the preferred embodiment of the invention the desire for a salt-free aqueous medium rules out the use of ionic buffering agents as is so often used in many polymerization recipes for maintaining a particular pH range.   Accordingly, the scope of the preferred embodiment of the invention may be limited to those emulsion recipes in which control of the pH by ionic buffer systems is not mandatory.

The vinyl acetate-ethylene and vinyl chloride-ethylene copolymers comprise 5 to 35 wt% ethylene and, optionally, up to about 10 wt% of an ethylenically unsaturated copolymerizable monomer, based on monomers in the polymerization recipe. It is preferred that the ethylene content of the copolymer be 10 to 25 wt% and the optional comonomer content, if present, be 1 to 5 wt%. The vinyl acetate homopolymers may also contain such amounts of an ethylenically unsaturated copolymerizable monomers.

It is also to be understood that some of the vinyl chloride and vinyl acetate in their copolymers with ethylene can be replaced by the other to afford vinyl chloride-vinyl acetate-ethylene copolymers within the scope of the invention.

Contemplated as the functional, or operative, equivalents of vinyl acetate in the homopolymer and copolymer emulsions of the invention are vinyl esters of $C_1$-$C_{18}$ alkanoic acids, such as vinyl formate, vinyl propionate, vinyl laurate and the like.

Suitable ethylenically unsaturated copolymerizable monomers by way of illustration, include $C_3$-$C_{10}$ alkenoic acids, such as acrylic acid, methacrylic acid, crotonic acid and isocrotonic acid, and their esters with $C_1$-$C_{18}$ alkanols such as methanol, ethanol, propanol and butanol, as well as 2-ethylhexyl alcohol, cyclohexyl alcohol and lauryl alcohol; alpha,beta-unsaturated $C_4$-$C_{10}$ alkenedioic acids such as maleic acid, fumaric acid and itaconic acid and their monoesters and diesters with the same $C_1$-$C_{18}$ alkanols; and nitrogen containing monoolefinically unsaturated monomers, particularly nitriles, amides, N-methylol amides, lower alkanoic acid esters of N-methylol amides, lower alkyl ethers of N-methylol amides and allyl carbamates, such as acrylonitrile, acrylamide, methacrylamide, N-methylol acrylamide, N-methylol methacrylamide, N-methylol allyl carbamate or N-methylol lower alkyl ethers or N-methylol lower alkanoic acid esters of N-methylol acrylamide, N-methylol methacrylamide and N-methylol allyl carbamate.

In general, the polyvinyl alcohol and the non-ionic redox system can be added in any manner generally used in the art such as addition of the entire amount of the component initially or by incremental addition, continuously or intermittently, over a period of time (delay addition).

A general reference book in the art teaching the polymerization procedures which can be used to prepare the emulsions of the inventions is Polymer Synthesis, Volume I and II, by S. R. Sandler and W. Karo, Academic Press, New York and London, (1974).

Suitably, vinyl acetate and ethylene can be copolymerized in an aqueous medium under pressures usually not exceeding 100 atm in the presence of the polyvinyl alcohol dispersing agent with the non-ionic redox system being added incrementally. The process is a batch process which first involves a homogenization in which the vinyl acetate suspended in water containing the polyvinyl alcohol is thoroughly agitated in the presence of ethylene under the working pressure to effect solution of the ethylene in the vinyl acetate while the reaction medium is gradually heated to polymerization temperature. The homogenization period is followed by a polymerization period during which the redox system is added incrementally.

The reaction temperature can be controlled by the rate of redox addition and the rate of the heat dissipation. Generally, it is advantageous to maintain a mean temperature of about 50°C during the polymerization of the monomers and to avoid temperatures much in excess of 80°C. While temperatures as low as 0° can be used, economically the lower temperature limit is about 30°C.

The reaction time will depend upon variables such as the temperature and the desired extent of the polymerization. It is generally desirable to continue the reaction until less than 0.5% of free vinyl acetate monomer remains unreacted.

In carrying out the polymerization, an amount of vinyl acetate is initially charged to the polymerization vessel and saturated with ethylene. Most advantageously, at least about 10% of the total vinyl acetate monomer to be polymerized is initially charged, preferably at least 20%, and the remainder of the vinyl acetate monomer is incrementally added during the course of the polymerization. The charging of all the vinyl acetate monomer initially is also contemplated with no additional incremental supply.

When reference is made to incremental addition, substantially uniform additions, both with respect to quantity and time, are contemplated. Such additions are also referred to as "delay" additions and can be performed in a continuous manner.

Of course, in the cases where an ethylenically unsaturated copolymerizable monomer is included in the polymerization recipe, the monomer can be added all at once or incrementally.

The quantity of ethylene entering into the copolymer is influenced by the pressure, the agitation, and the viscosity of the polymerization medium. Thus, to increase the ethylene content of the copolymer, higher pressures, greater agitation and a low viscosity are employed.

The process of forming the vinyl acetate-ethylene copolymer emulsion generally comprises the preparation of an aqueous solution containing the polyvinyl alcohol stabilizing agent. This aqueous solution and the initial or total charge of the vinyl acetate are added to the polymerization vessel and ethylene pressure is applied to the desired value. The pressurized ethylene source can be shut off from the reactor so that the ethylene pressure decays as it is polymerized or it can be kept open to maintain the ethylene pressure throughout the reaction, i.e. make-up ethylene. As previously mentioned, the mixture is thoroughly agitated to dissolve ethylene in the vinyl acetate and in the water phase. Conveniently, the charge is brought to polymerization temperature during this agitation period. The polymerization is then initiated by introducing initial amounts of either the oxidant or the reductant, the other having been added with the initial charge. After polymerization has started, the oxidant or reductant is incrementally added as required to continue polymerization. Any third copolymerizable monomer and the remaining vinyl acetate, if any, may be added as separate delays.

Vinyl acetate-ethylene copolymer emulsions of relatively high solids contents can be directly produced having a solids content of 40 to 70%. They can, of course, be easily thinned by the addition of water to lower solids content of any desired value.

The above typical procedure for preparing vinyl acetate-ethylene copolymers can, in general, be followed for preparing vinyl acetate homopolymer emulsions of 30 to 60 wt% solids by disregarding any reference to ethylene.

Another method for producing vinyl acetate-ethylene copolymer emulsions comprises first forming an aqueous emulsion of vinyl acetate and the polyvinyl alcohol stabilizing system in a reactor. The reactor is pressurized with ethylene to an ethylene-equilibrium pressure of about 200 to 500 psig. The resulting reaction mixture is adjusted to a temperature from about 10 to 30°C. Polymerization is initiated by the addition of a free radical source at a rate such that the reaction mixture is brought to a temperature of 45 to 85°C, preferably 65 to 75°C, within a period of 1 hour or less, preferably 30 minutes. The polymerization is continued as described previously until the vinyl acetate content is reduced below about 0.7 wt% of the copolymer.

This type of polymerization process is described in U.S. Patent 4,332,850 which is incorporated by reference.

The preferred method for preparing vinyl chloride-ethylene copolymer emulsions of the invention having a solids content of about 40 to 60% comprises

(a) forming an aqueous emulsion reaction mixture containing substantially all the polyvinyl alcohol and a portion, preferably at least 5%, of the total vinyl chloride monomer,

(b) pressurizing the reaction mixture with an ethylene pressure sufficient to provide the copolymer with about 5 to 35 wt% ethylene content,

(c) initiating the reaction mixture by the addition of the non-ionic redox system of the invention and continuing polymerization until the rate of polymerization begins to decrease,

(d) adding the remaining vinyl chloride, preferably at a substantially uniform rate over a period of time, while continuing polymerization until the reaction is no longer self sustaining, and

(e) removing the unreacted ethylene and reducing the vinyl chloride free monomer content, preferably to less than 10 ppm.

Although the water resistance of emulsion polymers of this invention is surprisingly enhanced compared to similar polymers prepared in an aqueous medium containing ionic material such as an ionic oxidant or reductant or an ionic emulsifying agent, the water resistance can be further increased by crosslinking the hydroxyl sites on the polymer with crosslinking agents. There are many known reagents for crosslinking polyvinyl alcohol and these include formaldehyde and other aldehydes, in particular dialdehydes such as glutaraldehyde and glyoxal; dimethylol urea, tetrabutyl titanate, bis-3-methoxyl propylidene, pentaerythritol; diazonium and tetrazonium salts and boric acid. Polyvinyl alcohol may also be crosslinked by radiation. Other agents which might be used are those known to crosslink cellulose, for example N-methylol and N-methylol ether derivatives of amines, amides and ureas, such as dimethylol dihydroxy ethylene urea and ethyl-N,N-dimethylol carbamate; diepoxides such as diglycidyl ether; ethyleneamine derivatives; divinyl sulphone and bis-(2-hydroxyethyl)sulphone; epichlorohydrin; phosgene and diacid-dichlorides; and 4,5-dihydroxy-1,3-dimethyl-2-imidazolidinone.

Such crosslinking agents typically are added to the polymer emulsion just prior to the coating step in a 1 to 10 wt% range, based on emulsion solids. Acid catalysts such as phosphoric acid, hydrochloric acid, p-toluenesulfonic acid, and oxalic acid are often added to catalyze the crosslinking reaction upon heating of the polymer films or coatings.

Since the emulsion polymers provided by the instant invention possess enhanced water resistance, a desirable utility for these polymers is in can coating compositions. Such container coating compositions generally involve admixing the resin emulsions with crosslinking resins, coalescing agents and components well known in the art such as melamine formaldehydes, epoxies, dialdehydes, amines, diols, acid catalysts and organic co-solvents. A general can coating formulation would comprise (a) about 45 to 95 wt% copolymer emulsion, (b) about 5 to 40 wt% crosslinking resin, based on solids, (c) up to 10 wt% organic cosolvent (coalescing agent) and, optionally, (d) up to 5 wt% acid catalyst. An illustrative container coating formulation would be a vinyl acetate homopolymer emulsion or a vinyl acetate-ethylene or vinyl chloride-ethylene copolymer emulsion according to the invention and Cymel 303 melamine formadehyde, 90/10 wt%, 40 wt% solids in water/diethylene glycol monoethylether acetate (90/10 wt%).

The compositions are applied to a suitable metal substrate such as aluminum or steel sheet in any manner well known in the can coating art including spraying, casting, immersion, electrodeposition and roll coating. The composition containing the emulsion is typically applied in amounts ranging from 0.5 to 50 mil. The coatings are then heated at temperatures generally above about 150°C for at least 10 minutes for drying and curing to afford a container having a polyvinyl alcohol containing resin coating which possesses enhanced water resistance.

Other uses for the emulsion polymers of the invention include water resistant adhesives, particularly vinyl acetate-ethylene polymers, water resistant carpet backing emulsions, and non-woven binders.

### EXAMPLE 1

In Runs 1-19, polyvinyl alcohol stabilized vinyl chloride-ethylene copolymer products were synthesized using either erythorbic acid or sodium formaldehyde sulfoxylate as the reductant by the following procedure:

The following initial charge was introduced into the reaction vessel:

#### INITIAL CHARGE

| | |
|---|---|
| Distilled water | 555g |
| Ferrous ammonium sulfate | 0.9g |
| Sequestrine 30A[a] | 2.7g |
| Vinol·205[b] PVOH (12% solution) | 854g |

[a] Ethylenediamine tetraacetic acid sodium salt marketed by Ciba-Geigy as a 30% aqueous solution

[b] An 87-98 mole% hydrolyzed PVOH marketed by Air Porducts and Chemicals, Inc.

The pH of the above charge was adjusted between 4.0 and 4.5 with acetic acid.

The vessel contents were agitated at 200 rpm and purged three times with ethylene (25 psig). Vinyl chloride monomer (240g) was then added and the reactor was heated to 55°C and pressurized with ethylene (875 psig). The agitation was increased to 900 rpm and 7 ml of 10% aqueous solution of erythorbic acid (pH 4.5) was pumped into the reactor. After the temperature (52°C) and the desired ethylene pressure (usually 875 psig) had been equilibrated, the polymerization was initiated by the addition of a 1% aqueous hydrogen peroxide solution at a fixed rate. The temperature of the polymerization reaction mixture was allowed to rise to 55°C where it was maintained automatically by the heat exchange function of the reaction vessel jacket as is well known in the art. Concomitantly, the pressure would rise for example from 875 psig to almost 950 psig. The jacket temperature began to drop after initiation and, usually, after about 1/2 hour would reach a minimum, namely about 40°C. In approximately 5 to 10 minutes the jacket temperature usually began to rise corresponding to the time when the rate of polymerization began to decrease. When the jacket temperature approached 45 to 50°C the amount of oxidant consumed was recorded and the remaining vinyl chloride monomer (1,415g) was added over approximately a 4 hour period maintaining the polymerization temperature of 55°C by the delay addition of the hydrogen peroxide as a 1% solution and erythorbic acid as the activator. Addition of oxidant and reductant was continued after the vinyl chloride monomer had been added to complete polymerization. If a third monomer such as acrylic acid, acrylamide, or N-isobutoxymethyl acrylamide were added, such comonomer addition was commenced upon initiation of the reaction mixture and incrementally added over a period of time as is well known in the art. The ethylene pressure was allowed to "float" during the polymerization without makeup or withdrawal. The emulsion was transferred to a degasser and the unreacted vinyl chloride monomer reduced to less than about 10 ppm by the addition of vinyl acetate (15g) followed by t-butyl hydroperoxide (about 4g) and erythorbic acid (about 3g), ferrous ammonium sulfate (about 0.2g) and Sequestrine 30A (about 0.8g) in water (about 50g).

The emulsion polymers of Runs 1-19 were evaluated using the following tests (See Table 1):

Blushing:                    Blushing (film whitening) is observed immediately following removal of coated aluminum panel from test solution and rated using the following scale:

Rating scale 10-0 (10 excellent or not change)

10 = No Blush
8 = Faint Blush
6 = Moderate Blush
4 = Definite
2 = Very White
0 = Terrible, Film Lifts

Impact Resistance:           ASTM D 2794-69

Pencil Hardness:             ASTM D 3363-74

Metal Adhesion:              ASTM D 3359-78 using Ericsen Type 295 Adhesion tester

MEK Resistance:              A cotton swab saturated with MEK is rubbed back and forth across coated panel until coating is removed or until 100 rubs is reached.  One back and forward movement across test panel constitutes one rub.

TABLE 1

| RUN | 1 | 2 | 3 | 4 | 5 | 6 | 7 | 8 | 9 | 10 | 11 | 12 |
|---|---|---|---|---|---|---|---|---|---|---|---|---|
| VINYL CHLORIDE | 83 | 83 | 81 | 78 | 80 | 85 | 81 | 83 | 78 | 81 | 93 | 85 |
| ETHYLENE | 17 | 17 | 19 | 21 | 20 | 15 | 19 | 17 | 22 | 18 | 6 | 15 |
| COMONOMER (%) | 3% AAm | -- | -- | -- | -- | -- | -- | -- | -- | 1% AA | 1% AA | 1% AA |
| POLYVINYL ALCOHOL (%) | 5 (SLS) | 5 | 5 | 6 | 6 | 6 | 10 | $10^A$ | $10^A$ | 5 | 5 | 5 |
| REDOX SYSTEM | $NH_4S_2O_8$ / SFS | $NH_4S_2O_8$ / SFS | $H_2O_2$ / EA | (SAME FOR RUNS 3 – 12) | | | | | | | | |
| ACCELERATED SEDIMENTATION (%) | --- | --- | 8 | 6 | 7 | 4 | 1 | 2 | 1 | 6 | 3.5 | 15 |
| Tg (°C) | 30 | 27 | 21.5 | 22.5 | 29 | 34 | 34 | 33.5 | 25 | 26.5 | 25 | 30 |
| SOLIDS (wt%) | 50 | 55 | 55 | 46 | 51 | 52 | 50 | 51.5 | 49 | 52 | 52 | 49 |
| DRY FILM | | | | | | | | | | | | |
| PENCIL HARDNESS | 2H | 5H | 4H | 5H | 5H | 5H | 4H | 4H | 5H | 4H | 4H | 5H |
| MEK RUBS | 6 | 3 | 3 | 1 | 2 | 4 | 3 | 3 | 1 | 3 | 3 | 2 |
| BOILING WATER (2 min) | | | | | | | | | | | | |
| BLUSH RESISTANCE | 7 | 6 | 8+ | 9 | 9 | 7 | 9+ | 9 | 7+ | 9+ | 10 | 9 |
| AL ADHESION | 0 | 9 | 10 | 10 | 10 | 10 | 10 | 10 | 10 | 10 | 10 | 10 |
| PENCIL HARDNESS | 5B | 4B | H | 2B | -- | B | H | H | H | 2B | HB | F |
| WATER SOAK | | | | | | | | | | | | |
| BLUSH RESISTANCE | 10 | 10 | 10 | 10 | 10 | 10 | 10 | 10 | 10 | 10 | 10 | 10 |
| PENCIL HARDNESS | B | HB | 4H | 2H | 4H | F | HB | 5H | 3H | 3H | -- | 5H |

A = Polyvinyl alcohol; $\overline{DP}n$ about 100
AA = acrylic acid
AAm = acrylamide
N-1-BMA = N-1-butoxymethylacrylamide

EA = erythorbic acid
SFS = sodium formaldehyde sulfoxylate
SLS = sodium lauryl sulfate

TABLE 1
(Continued)

| RUN | 13 | 14 | 15 | 16 | 17 | 18 | 19 |
|---|---|---|---|---|---|---|---|
| VINYL CHLORIDE | 80 | 78 | 78 | 77 | --- | 79 | 81 |
| ETHYLENE | 18 | 19 | 21 | 22 | --- | 20 | 18 |
| COMONOMER (%) | 2% AA | 3% AA | 1% AA | 3% AA | 3% AA | 1% AAm | 1% N-i-BMA |
| POLYVINYL ALCOHOL (%) | 5 | 5 | 6 | 6 | 6 | 5 | 5 |
| REDOX SYSTEM | $H_2O_2$ EA.........................(SAME FOR RUNS 13 - 19)....... | | | | | | |
| ACCELERATED SEDIMENTATION (%) | 10 | 20 | 1 | 1 | --- | 9 | 7 |
| Tg (°C) | 23 | 27.5 | 25.5 | 34 | --- | 27.5 | 38.5 |
| SOLIDS (wt%) | 53.7 | 53 | 49.5 | 49 | --- | 53 | 45.6 |
| DRY FILM | | | | | | | |
| PENCIL HARDNESS | 4H | 4H | 4H | 4H | 5H | 4H | 5H |
| MEK RUBS | 3 | 3 | 3 | 3 | 3 | 3 | 20 |
| BOILING WATER (2 min) | | | | | | | |
| BLUSH RESISTANCE | 8+ | 7+ | 10 | 10 | 8 | 9+ | 10 |
| AL ADHESION | 10 | 8 | 10 | 10 | 10 | 10 | 10 |
| PENCIL HARDNESS | 2B | 2B | HB | H | H | 2B | 5H |
| WATER SOAK | | | | | | | |
| BLUSH RESISTANCE | 9+ | 10 | 10 | 10 | 10 | 10 | 10 |
| PENCIL HARDNESS | H | 3H | -- | -- | F | 3H | 5H |

-15A-

0 191 460

# TABLE 2

| EMULSION RUN | 1 | 1 | 2 | 2 | 8 | 8 | 10 | 10 | 10 | 10 | 10 | 11 |
|---|---|---|---|---|---|---|---|---|---|---|---|---|
| CROSS-LINKER (% solids/solids) | --- | 10% CYMEL303 | --- | 10% CYMEL303 | --- | 10% CYMEL303 | --- | 10% DER732 | 10% CYMEL303 | 10% CYMEL303 MC | 10% RESIMENE 730 | --- |
| pH | --- | 4.3 | --- | 4.6 | --- | 8.0 | 5.3 | --- | --- | --- | --- | |
| **DRY FILM** | | | | | | | | | | | | |
| PENCIL HARDNESS | 2H | 5H | 5H | 5H | 4H | 5H | 4H | 4H | 5H | 5H | 5H | 4H |
| MEK DBL RUB | 6 | 10 | 3 | 4 | 3 | 17 | 3 | 3 | 3 | 10 | 3 | 3 |
| **BOILING WATER** | | | | | | | | | | | | |
| BLUSH RESISTANCE ( 2 min) | 7 | --- | 6 | --- | 9 | 10 | 9+ | 8 | --- | --- | --- | 10 |
| BLUSH RESISTANCE (30 min) | --- | 1 | 0 | 0 | 8 | 10 | 9 | --- | 7 | 9 | 6 | 10 |
| AL ADHESION ( 2 min) | 0 | --- | 9 | --- | 10 | --- | 10 | 9+ | --- | --- | --- | --- |
| AL ADHESION (30 min) | --- | 10 | 10 | 0 | 10 | 10 | 10 | --- | 4 | 10 | 7 | 10 |
| PENCIL HARDNESS ( 2 min) | 5B | --- | 4B | --- | 5H | --- | 2B | 4B | --- | --- | --- | --- |
| PENCIL HARDNESS (30 min) | --- | 4B | 6B | 5B | H | 3H | F | --- | 3B | 2B | 6B | H |
| **24 HOUR SOAK (ACID/WATER)** | | | | | | | | | | | | |
| BLUSH RESISTANCE (ACID) | --- | 10 | --- | 5 | 10 | 10 | 10 | --- | 10 | 10 | --- | 10 |
| BLUSH RESISTANCE (WATER) | 10 | 10 | 10 | 10 | 10 | 10 | 10 | 10 | --- | --- | --- | 10 |
| AL ADHESION (ACID) | --- | 7 | --- | 10 | 6 | 10 | 10 | --- | 10 | 10 | --- | 10 |
| AL ADHESION (WATER) | --- | 4 | --- | 10 | 10 | 10 | 10 | 9 | --- | --- | --- | 10 |
| PENCIL HARDNESS (ACID) | --- | B | --- | F | 3H | 4H | H | --- | 2H | 4H | --- | H |
| PENCIL HARDNESS (WATER) | B | B | HB | H | 5H | 4H | 3H | HB | --- | --- | --- | 4H |

DER 732 is a water based epoxy resin marketed by Dow Chemical.
CYMEL 303 is a melamine formaldehyde marketed by American Cyanamid.
RESIMENE 730 is a melamine formaldehyde marketed by Monsanto.
MC is methyl cellosolve.

TABLE 2
(Continued)

| EMULSION RUN | 11 | 14 | 14 | 14 | 14 | 14 | 15 | 16 | 16 | 18 | 18 |
|---|---|---|---|---|---|---|---|---|---|---|---|
| CROSS-LINKER (% solids/solids) | 10% CYMEL303 | --- | 10% CYMEL303 | --- | 10% RESIMENE 730 | 5% DER732 | --- | --- | 10% CYMEL303 MC | --- | 10% CYMEL303 |
| pH | --- | 5.8 | --- | 5.8 | 5.7 | 4.7 | --- | --- | --- | --- | 4.6 |
| **DRY FILM** | | | | | | | | | | | |
| PENCIL HARDNESS | 4H | 4H | 5H | 5H | 5H | 5H | 4H | 4H | 5H | 4H | 5H |
| MEK DBL RUB | 4 | 3 | 20 | 3 | 12 | 2 | 3 | 3 | 18 | 3 | 3 |
| **BOILING WATER** | | | | | | | | | | | |
| BLUSH RESISTANCE ( 2 min) | --- | 7+ | --- | 8 | 6 | 10 | 10 | 10 | 10 | 9+ | --- |
| BLUSH RESISTANCE (30 min) | 9 | 6 | 10 | --- | --- | --- | 10 | 10 | 10 | --- | 4 |
| AL ADHESION ( 2 min) | --- | 8 | --- | 10 | 6 | 10 | --- | 10 | --- | 10 | --- |
| AL ADHESION (30 min) | 10 | 10 | 10 | --- | --- | --- | 10 | 10 | 10 | --- | 10 |
| PENCIL HARDNESS ( 2 min) | --- | 2B | --- | HB | 5B | 4B | --- | H | --- | 2B | --- |
| PENCIL HARDNESS (30 min) | F | 4B | H | --- | --- | --- | HB | H | H | --- | H |
| **24 HOUR SOAK (ACID/WATER)** | | | | | | | | | | | |
| BLUSH RESISTANCE (ACID) | 10 | 9 | 10 | --- | --- | --- | 10 | 10 | 10 | --- | 10 |
| BLUSH RESISTANCE (WATER) | 10 | 10 | 10 | 10 | 10 | 10 | 10 | 10 | 10 | 10 | 10 |
| AL ADHESION (ACID) | 10 | 5 | 10 | --- | --- | --- | 10 | 10 | 10 | --- | 10 |
| AL ADHESION (WATER) | 10 | 10 | 10 | 10 | 7 | 10 | 10 | 10 | 10 | 10 | 10 |
| PENCIL HARDNESS (ACID) | H | 5B | H | --- | --- | --- | H | --- | 4H | --- | 2H |
| PENCIL HARDNESS (WATER) | 3H | 3H | 4H | H | 3B | H | 4H | 3H | 5H | 3H | 4H |

-16A-

The comparison of Run 1 with Run 2 shows the effect of polyvinyl alcohol in place of an ionic surfactant in the vinyl chloride-ethylene polymerization recipe. The dry film tensile hardness is improved and the adhesion of the film to aluminum is improved significantly as shown by its ability to withstand boiling water. When Run 2 was repeated using a salt-free system in Run 3 (erythorbic acid instead of sodium formaldehyde sulfoxylate as reductant), the blush resistance was improved and the hardness retention of the film after exposure to water was significantly better.

Runs 4-6 demonstrate the effect of increasing the polyvinyl alcohol content to about 6 wt%. In these runs an improvement in blush resistance in boiling water was obtained over Runs 1 and 2. The further slight improvement in blush resistance was obtained in Run 7 by the addition of 4 wt% more polyvinyl alcohol to a 10 wt% total polyvinyl alcohol level.

Runs 10-14 show the effect of adding 1, 2 and 3% acrylic acid to a 5% polyvinyl alcohol containing vinyl chloride-ethylene polymerization recipe. Here the blush resistance and hardness of the film has been improved. Runs 15-17 show the effect of increasing the polyvinyl alcohol content to 6 wt% at 1 and 3% acrylic acid levels. Outstanding blush resistance and improvement in boiling water film hardness were demonstrated.

Runs 18 and 19 show the 5% polyvinyl alcohol stabilized vinyl chloride-ethylene copolymers prepared in a salt-free reaction medium and also comprising a nitrogen-containing monomer, namely acrylamide and N-isobutoxymethyl acrylamide, respectively. Run 18 showed good blush resistance and Run 19 showed excellent blush resistance and hardness. In addition, a substantial improvement in MEK rubs was obtained in Run 19 due to the self-crosslinking nature of N-isobutoxymethyl acrylamide.

Several of the vinyl chloride-ethylene copolymer emulsions were tested with and without external cross-linkers as films deposited by a #8 wire rod onto aluminum pans and cured for 10 minutes at 380°F. The resultant data are set forth in Table 2. It is apparent from the data that combining the polyvinyl alcohol/vinyl chloride-ethylene copolymers prepared in a salt-free environment with crosslinking agents provides a container coating formulation which can deposit a resin film having good water resistance and hardness.

## EXAMPLE 2

This example illustrates the synthesis of polyvinyl alcohol stabilized vinyl acetate polymer emulsions which polymers showed excellent water resistance after crosslinking with glutaraldehyde.

A typical procedure for the preparation of the emulsions of Runs 20-34 which are described in Table 3 is given below for Run 27.

A solution of Vinol 205 polyvinyl alcohol which is 88 mol% hydrolyzed (262g Vinol 205 in 2444g water) was charged to a one gallon stainless steel reactor followed by the addition of 786g vinyl acetate. The air was removed from the reactor by sparging nitrogen through the reaction mixture for 30 minutes while agitating at 100 rpm and 25°C.

The reaction mixture was then heated to about 55°C, the temperature allowed to stabilize at 54.5-55.0°C by means of a circulating water cooling jacket, and the stirring speed was increased to 900 rpm.

The reaction was initiated by feeding separate solutions of 1.25 wt% hydrogen peroxide and 1.25 wt% erythorbic acid at equal pumping rates of 0.5 ml/min. Initiation was observed after 15 minutes as shown by a reaction temperature increase of 0.5-1.0°C. After another 15 minutes of pumping, the reaction temperature had reached 62°C, and the jacket had dropped to 32.6°C (outlet temperature) indicating a vigorous reaction. After another 30 minutes reaction time, the reaction temperature had returned to 52.5°C and the amount of unreacted vinyl acetate monomer had decreased to about 0.5%. The reaction mass was cooled to about 30°C and discharged from the reactor. The product was foamy and quite viscous with a blue-white color. After standing overnight the foam subsided and the emulsion was observed to contain 28% by weight of polymer solids and to have a blue color. A film of this emulsion cast on glass (2 mils wet) was optically clear and colorless.

The emulsion polymers of Runs 20-34 of Table 3 were evaluated for water resistance by the following test: The polymer sample was mixed with a 25 wt% glutaraldehyde solution (50g emulsion + 4g glutaraldehyde) and adjusted to pH of about 2 with 50% phosphoric acid. A 3 mil wet film was coated on glass, dried and heated to 150°C for 3 minutes. The coated glass was then immersed in boiling water and the time to blush or to lose adhesion was determined.

TABLE 3

| RUN | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|
| PVOH (wt%) | 15 | 18 | 13 | 15 | 12 | 12 | 12 | 10 | 11 | 12 | 15 | 15 | 13 | 10 | 10 |
| VAc (g) | 225 | 262 | 786 | 225 | 415 | 415 | 113 | 786 | 786 | 786 | 225 | 225 | 786 | 113 | 786 |
| $H_2O_2$ (g) | 0.11 | 0.09 | 0.42 | 0.11 | 0.61 | 0.76 | 0.38 | 0.33 | 0.56 | 1.7 | | | 0.42 | 2.1 | |
| $H_2O_2$ Soln (wt%) | 2.5 | 5 | 2.5 | 2.5 | 2.5 | 2.5 | 2.5 | 1.25 | 2.5 | 3 | | | 2.5 | 2.5 | |
| t-BHP (g) | | | | | | | | | | | 0.08 | | | | |
| CHP (g) | | | | | | | | | | | | 0.13 | | | |
| $Na_2S_2O_4$ (g) | | | | | | | | | | | | | | | 4.5 |
| SFS (g) | 0.14 | 0.85 | 0.28 | | | | | | | | | | | | |
| TTA (g) | | | | 0.11 | 0.80 | 0.65 | | | | | | | | | |
| AA (g) | | | | | | | 0.38 | (0.37)* | (0.64)* | (2.0)* | 0.10 | 0.10 | (0.32)* | | |
| React. (°C) | 57 | 55 | 55 | 55 | 50 | 50 | 55 | 55 | 55 | 55 | 55 | 55 | 40 | 68-85 | 52-55 |
| React. (min.) | 45 | 45 | 35 | 25 | 60 | 55 | ~10 | 80 | 65 | | 30 | 45 | 90 | 90 | 45 |
| Solids (%) | 41 | 46 | 37 | 38 | 29 | 40 | 30 | 28 | 35 | 30 | 39 | 40 | 37 | 29 | 29 |
| Film Color | B | W | W | B | W | W | B | B | B | B | B | B | W | B | ⌐ |
| Blush (min.) | 30 | inst. | 11 | inst. | 2 | inst. | 3 | >30 | >30 | >30 | >30 | 30 | 15 | inst. | |
| Lose Adhesion (min.) | 12? | --- | >30 | 6 | 3 | inst. | --- | >30 | >30 | 28 | 10 | 12 | >30 | inst. | |
| $H_2O_2$ rate (ml/min) | 0.15 | 0.3 | 2 | 0.5 | 1.0 | 1.0 | 5 | 0.5 | 0.5 | 3 | 0.2 | 0.2 | 2 | ---- | |

PVOH = polyvinyl alcohol  
VAc = vinyl acetate  
t-BHP = t-butyl hydroperoxide  
CHP = cumene hydroperoxide  
SFS = sodium formaldehyde sulfoxylate  

TTA = tartaric acid  
AA = ascorbic acid  
B = blue  
W = white  
* = (erythorbic acid)

The data of Table 3 indicates that the preferred polymerization initiation system comprises hydrogen peroxide and ascorbic acid or erythorbic acid redox pair, this system being capable of generating interpolymers of polyvinyl alcohol and vinyl acetate which, after crosslinking with glutaraldehyde, yielded films which were free of blushing upon immersion in boiling water for periods of time greater than 3 minutes and which at the same time did not lose their adhesion to the substrate in boiling water for 30 minutes or longer. Runs 30 and 31, which were made using ascorbic acid and, respectively, t-butyl hydroperoxide and cumene hydroperoxide, afforded polymers of good blushing resistance, but relatively deficient in adhesion, indicating that the preferred initiating redox pair should be of the water soluble type.

Run 33 revealed that while hydrogen peroxide was by itself capable of polymerizing vinyl acetate in this recipe, higher temperatures were required and the resultant polymer had no blush resistance or adhesion in boiling water. In Run 33, 2.1g of hydrogen peroxide was required to convert 113g of vinyl acetate to the polymer. Similarly in Run 34, sodium persulfate which was used as the initiator in molar amounts equal to that of hydrogen peroxide in Run 27 and at the same temperature, yielded yellow films of poor water resistance. The water resistant deficiencies of the Run 33 and Run 34 interpolymers were mostly likely due to the known oxidative degradation of polyvinyl alcohol by hydrogen peroxide and sodium persulfate.

Because of this recognized ease of chain breaking oxidation of PVOH, it is preferred to conduct these polymerizations with addition of $H_2O_2$ catalyst as a dilute solution, for example less than about 2%, and at a slow addition rate, so that in the event of a polymerization induction period, high concentrations of $H_2O_2$ relative to PVOH are not encountered.

For this reason, it is preferred to introduce the $H_2O_2$ feed at a relatively slow rate of no more than 2.0 ml/minute or equivalent by maintaining an $H_2O_2$: PVOH weight concentration of less than about 0.02 g/100 g PVOH, preferably less than 0.01 g/100 g PVOH.

It is common practice at the end of the polymerization process to substantially increase the catalyst addition to finish the reaction.

The importance of this may be made clear by regrouping the tabulated data of Runs 26, 27, 28, 29, and 32 in the following illustration:

| Run # | $H_2O_2$ Pumping Rate ml/min. | Wt. % Concentration $H_2O_2$ | Minutes to Blush/Lose Adhesion |
|---|---|---|---|
| 26 | 5.0 | 2.5 | 3.0/- |
| 29 | 3.0 | 3.0 | >30/28 |
| 32 | 2.0 | 2.5 | 15/>30 |
| 28 | 0.5 | 2.5 | >30/>30 |
| 27 | 0.5 | 1.25 | >30/>30 |

Runs 26-29 revealed that hydrogen peroxide may be used in amounts approaching that of Run 33 provided an equal weight of ascorbic acid is also used. In contrast, much lower amounts of hydrogen peroxide yielded polymers of poor blushing/adhesion resistance when sodium formaldehyde sulfoxylate (Runs 20-22) or tartaric acid (Runs 23-24) were used as the reducing agent at equal or even much higher weight equivalents to the hydrogen peroxide. Thus it appears that ascorbic acid or its enantiomer erythorbic acid provides a "protective effect" against the oxidative degradation of polyvinyl alcohol, consistent perhaps with its well known antioxidant nature.

It can further be seen that $H_2O_2$ with sodium formaldehyde sulfoxylate or tartaric acid as reducing agents gave polymer films of much poorer water resistance at or below the above preferred $H_2O_2$ pumping rates. Regrouping the data of Runs #20 through 25 illustrates this effect:

| Run # | $H_2O_2$ Pumping Rate ml/min. | Wt. % Concentration $H_2O_2$ | Minutes to Blush/Lose Adhesion |
|---|---|---|---|
| 22 | 2.0 | 2.5 | >30/2.0 |
| 25 | 1.0 | 2.5 | instant/instant |
| 24 | 1.0 | 2.5 | 2/3 |
| 23 | 0.5 | 2.5 | instant/6.0 |
| 21 | 0.3 | 5.0 | instant/- |
| 20 | 0.15 | 5.0 | >30/12 |

This "protective effect" is of great value when one wishes to prepare polyvinyl alcohol stabilized copolymers from monomers which are much less reactive than vinyl acetate, i.e. vinyl chloride-ethylene and vinyl acetate-ethylene, as illustrated in Examples 1 and 3, which by their nature require significantly greater amounts of hydrogen peroxide be used for complete conversion.

## EXAMPLE 3

In this example the polyvinyl alcohol stabilized vinyl acetate-ethylene copolymer emulsions of Runs 35-46 were prepared using various redox systems. The following polymerization procedure is illustrative of that used.

A 6% Vinol 205 polyvinyl alcohol solution (744g), a 6% Vinol 523 polyvinyl alcohol solution (401g) and deionized water (30g) were charged to a one liter reactor and adjusted to pH 5.2 with glacial acetic acid. Ferrous ammonium sulfate (0.3g) and vinyl acetate (1430g) were then added.

The contents of the closed reactor was purged three times with nitrogen, heated and pressurized with ethylene (540 psig) at 52°C in the presence of 4% erythorbic acid solution (25 ml). The polymerization was initiated at 52°C by the addition of 0.5% t-butyl hydroperoxide solution at 0.1 ml/min and maintained by the simultaneous addition of the oxidant and reductant solutions until a residual vinyl acetate concentration of 2 wt% was obtained.

The reaction mass was then transferred to a degasser vessel and the residual vinyl acetate monomer concentration decreased to less than 0.5 wt% by simultaneous additions of about 15 ml of 10% erythorbic acid solution and 5% t-butyl hydroperoxide solution.

The water resistance properties of the emulsion polymers of Runs 35-46 were measured as wet peel strengths in pounds per linear inch (pli) and are set forth in Table 4.

0 191 460

- 23 -

TABLE 4

| RUN | ETHYLENE PRESSURE | PVOH (% of VAc) | REDOX SYSTEM | DRY PEEL (pli) | WET PEEL (pli) | Tg |
|---|---|---|---|---|---|---|
| 35 | 540 | 4.8 | tBHP/EA | 16.2 | 4.9 | 0 |
| 36 | 600 | 4.8 | $H_2O_2$/ZFS | 16.3 | 2.0 | 0 |
| 37 | 600 | 4.8 | $H_2O_2$/ZFS | 16.6 | 1.7 | 0 |
| 38 | 850 | 4.8 | tBHP/EA | 12.0 | 3.2 | -15 |
| 39 | 850 | 4.8 | $H_2O_2$/ZFS | 14.8 | 1.4 | -15 |
| 40 | 1400 | 7.2 | tBHP/EA | 11.8 | 2.0 | -28 |
| 41 | 1400 | 7.2 | $H_2O_2$/ZFS | 13.1 | 1.3 | -28 |
| 42 | 300 | 4 | $H_2O_2$/ZFS | ---- | 1.2 | |
| 43 | ---- | ---- | $H_2O_2$/EA | ---- | 1.6 | |
| 44 | ---- | ---- | $H_2O_2$/EA | ---- | 3.0 | |
| 45 | ---- | ---- | $H_2O_2$/EA | ---- | 2.7 | |
| 46 | 300 | 4.8 | $H_2O_2$/EA | ---- | 1.2 | |

EA = erythorbic acid
ZFS = zinc formaldehyde sulfoxylate
tBHP = t-butyl hydroperoxide

It can be seen from the data in Table 4 that with the exception of Run 46 the polyvinyl alcohol/vinyl acetate-ethylene emulsion copolymers generally demonstrated improved wet peel (resistance to water) as a result of the use of a salt-free redox system.

These runs seem to indicate that an oil-soluble oxidant such as t-butyl hydroperoxide is preferable in the copolymerization of vinyl acetate and ethylene in the presence of a polyvinyl alcohol stabilizing agent.

### Statement of Industrial Application

The invention provides emulsion polymers possessing adhesion to metal surfaces, hardness, solvent resistance, and most importantly enhanced water resistance. The emulsions can be used to provide a film, or coating, for the interior of metal cans.

## Claims

1. A polyvinyl alcohol-containing resin emulsion which comprises a polymer colloidally dispersed in an aqueous medium, the polymer having enhanced water resistance and consisting essentially of vinyl acetate, vinyl acetate and about 5 to 35 wt% ethylene, or vinyl chloride and about 5 to 35 wt% ethylene, and prepared by aqueous emulsion polymerization of the monomers in the presence of an emulsifying agent consisting essentially of polyvinyl alcohol using a non-ionic redox system consisting essentially of hydrogen peroxide or an organic peroxy compound as the oxidant and ascorbic acid or erythorbic acid as the reductant.

2. The emulsion of Claim 1 in which the aqueous polymerization medium is substantially salt-free.

3. The emulsion of Claim 1 in which the oxidant is hydrogen peroxide.

4. The emulsion of Claim 1 in which the ethylene content of the copolymer is 10 to 25 wt%.

5. The emulsion of Claim 1 in which the polymer also contains up to 10 wt% of ethylenically unsaturated comonomer which is selected from $C_3-C_{10}$ alkenoic acids and their esters with $C_1-C_{18}$ alkanols, alpha,beta-unsaturated alkendioic acids and their monoesters and diesters with $C_1-C_{18}$ alkanols, and nitrogen containing monoolefinically unsaturated monomers.

6. The emulsion of Claim 5 in which the ethylenically unsaturated comonomer is 1 to 5 wt% of the copolymer, based on monomers.

7. The emulsion of Claim 1 in which the polyvinyl alcohol is 3 to 30 wt% based on monomers.

8. The emulsion of Claim 3 in which the polyvinyl alcohol is 3 to 30 wt% based on monomers.

9. A polymer coating having enhanced water resistance deposited from the resin emulsion of Claim 1.

10. A polymer coating having enhanced water resistance deposited from the resin emulsion of Claim 2.

11. A polymer coating having enhanced water resistance deposited from the resin emulsion of Claim 3.

12. A polymer coating having enhanced water resistance deposited from the resin emulsion of Claim 4.

13. A polymer coating having enhanced water resistance deposited from the resin emulsion of Claim 5.

14. A polymer coating having enhanced water resistance deposited from the resin emulsion of Claim 6.

15. A polymer coating having enhanced water resistance deposited from the resin emulsion of Claim 7.

16. A polymer coating having enhanced water resistance deposited from the resin emulsion of Claim 8.

17. In a resin emulsion which comprises a vinyl acetate-ethylene polymer containing from 0 to 10 wt% copolymerizable ethylenically unsaturated monomer, the vinyl acetate-ethylene polymer being prepared by emulsion polymerization in an aqueous medium containing an emulsifying system and a redox catalyst system, the improvement for enhancing the water resistance of the vinyl acetate-ethylene polymer which comprises effecting the polymerization of the monomers in the presence of an emulsifying system consisting essentially of a polyvinyl alcohol using a non-ionic redox system consisting essentially of hydrogen peroxide or an organic peroxy compound as the oxidant and ascorbic acid or erythorbic acid as the reductant.

18. The resin emulsion of Claim 17 in which the polyvinyl alcohol is 3 to 15 wt% based on monomers.

19. The resin emulsion of Claim 18 in which the oxidant is t-butyl hydroperoxide.

20. In a resin emulsion which comprises a vinyl chloride-ethylene copolymer containing 0 to 10 wt% copolymerizable ethylenically unsaturated monomer, the vinyl chloride-ethylene copolymer being prepared by emulsion polymerization in an aqueous medium containing an emulsifying system and a redox catalyst system, the improvement for enhancing the water resistance of the vinyl chloride-ethylene copolymer which comprises effecting the polymerization of the monomers in the presence of an emulsifying system consisting essentially of a polyvinyl alcohol using a non-ionic redox system consisting essentially of hydrogen peroxide or an organic peroxy compound as the oxidant and ascorbic acid or erythorbic acid as the reductant.

21. The resin emulsion of Claim 20 in which the polyvinyl alcohol is 3 to 15 wt% based on monomers.

22. The resin emulsion of Claim 21 in which the oxidant is hydrogen peroxide.

23. In a resin emulsion which comprises a vinyl acetate polymer containing 0 to 10 wt% copolymerizable ethylenically unsaturated monomer, the vinyl acetate polymer being prepared by emulsion polymerization in an aqueous medium containing an emulsifying system and a redox catalyst system, the improvement for enhancing the water resistance of the vinyl acetate polymer which comprises effecting the polymerization of the monomers in the presence of an emulsifying system consisting essentially of a polyvinyl alcohol using a non-ionic redox system consisting essentially of hydrogen peroxide or an organic peroxy compound as the oxidant and ascorbic acid or erythorbic acid as the reductant.

24. The resin emulsion of Claim 23 in which the polyvinyl alcohol is 3 to 30 wt% based on monomers.

25. The resin emulsion of Claim 24 in which the oxidant is hydrogen peroxide.

0640C

AD-60